# FASCICULE DE BREVET EUROPEEN

(11) **EP 3 634 799 B1**
(45) Date de publication et mention de la délivrance du brevet: **11.08.2021**
(21) Numéro de dépôt: 18738277.5
(22) Date de dépôt: 04.07.2018
(51) Int. Cl.: B60K 11/08

(54) **VOLET EXTRUDE ET DISPOSITIF D'OBTURATION D'ENTREE D'AIR DE FACE AVANT D'UN VEHICULE AUTOMOBILE COMPRENANT UN ENSEMBLE DE TELS VOLETS**
EXTRUDIERTE KLAPPE UND FRONTLUFTEINLASSVERSCHLUSS EINES KRAFTFAHRZEUGS MIT MEHREREN SOLCHER KLAPPEN
EXTRUDED FLAP AND MOTOR VEHICLE FRONT END AIR INLET SHUTTER DEVICE COMPRISING A COLLECTION OF SUCH FLAPS

(30) Priorité: 12.07.2017 FR 1756626
(43) Date de publication de la demande: 15.04.2020
(73) Titulaire: Valeo Systemes Thermiques, 78322 Le Mesnil Saint-Denis Cedex (FR)
(72) Inventeur: MINERO, Victor-Manuel, 78322 Le Mesnil Saint Denis Cedex (FR); NORÉ, Thomas, 78322 Le Mesnil Saint Denis Cedex (FR); ARAB, Karim, 78322 Le Mesnil Saint Denis Cedex (FR)
(74) Mandataire: Tran, Chi-Hai
(86) Numéro de dépôt international: PCT/EP2018/068027
(87) Numéro de publication internationale: WO 2019/011733

(56) Documents cités:
- EP-A1- 2 407 333
- WO-A1-2016/117269
- CN-Y- 200 949 407
- DE-A1- 4 422 537
- DE-A1-102011 103 585
- FR-A1- 2 992 590
- US-A- 3 115 223

## Description

La présente invention concerne le domaine des dispositifs d'obturation d'entrée d'air de face avant d'un véhicule automobile. Plus particulièrement, la présente invention concerne un volet destiné à former un ensemble de volets installé dans ce dispositif d'obturation afin notamment de permettre ou de bloquer le passage d'un flux d'air à travers ce dispositif d'obturation. La présente invention concerne également la coopération de cet ensemble de volets avec le dispositif d'obturation.

Les faces avant de véhicules automobiles sont généralement composées de deux entrées d'air principales dites voie haute et voie basse. Ces entrées d'air sont généralement séparées par une poutre pare-choc. Derrière cette poutre pare-choc sont placés les échangeurs de chaleur du véhicule automobile, comme par exemple celui utilisé pour la climatisation de l'habitacle et/ou encore celui utilisé pour le refroidissement du moteur.

Il est également connu de disposer, dans le trajet d'air passant par les entrées d'air principales, plus généralement la voie basse, un cadre support comportant une multitude de volets montés pivotant autour d'axes parallèles et propres à prendre une multitude de positions angulaires différentes, comprises entre une position extrémale ouverte et une position extrémale fermée, sous l'action de moyens de commande appropriés.

On obtient ainsi un dispositif d'obturation s'apparentant à une jalousie qui permet d'ajuster le débit d'air traversant les entrées d'air et arrivant aux échangeurs de chaleur. Il est ainsi possible d'optimiser l'efficacité de ces échangeurs de chaleur en fonction des besoins et en faisant varier la quantité d'air qu'ils reçoivent. De plus, à grande vitesse, les volets en position extrémale fermée permettent de diminuer le coefficient de traînée du véhicule et ainsi améliorent l'aérodynamisme dudit véhicule.

Par ailleurs, afin d'améliorer le procédé de fabrication des volets et leur poids, ceux-ci sont fabriqués par extrusion généralement.

Les dispositifs d'obturation sont fixés à l'avant du véhicule automobile et notamment les volets subissent la pression de l'air lorsque le véhicule automobile est en mouvement ce qui nécessite l'utilisation de renforts intermédiaires afin d'assurer un maintien rectiligne du volet et de prévenir sa torsion sous l'effet de la pression de l'air.

On connaît de l'art antérieur des dispositifs d'obturation présentant des traverses intermédiaires comportant des doigts sur lesquels reposent des formes locales présentes sur une face des volets afin de permettre de prévenir la torsion des volets.

Cependant, les volets reposent juste sur les doigts et ces doigts présentent des points de fragilité notamment aux chocs et au froid. Par ailleurs, de tels systèmes de renforts intermédiaires ne sont pas compatibles avec des volets obtenus par extrusion du fait de la présence uniquement locale des formes locales sur le volet. Ainsi, de tels volets ne peuvent servir que pour un seul type de dispositif d'obturation donné. D'autre part, avec de tels systèmes de renfort, la coopération du volet avec le doigt de renfort peut être optimisée afin de permettre un guidage en pivotement des volets.

Un exemple de volet pour dispositif d'obturation d'entrée d'air de face avant de véhicule automobile tel que décrit par le préambule de la revendication 1 est aussi montré dans le document FR 2 992 590 A1.

La présente invention a pour objectif de pallier au moins partiellement les inconvénients de l'art antérieur exposés ci-dessus.

Un autre objectif de la présente invention, différent de l'objectif précédent, est de proposer un volet extrudé pour un dispositif d'obturation pouvant coopérer avec un élément de renfort du dispositif d'obturation.

Un autre objectif de la présente invention, différent de l'objectif précédent, est de proposer un dispositif d'obturation présentant des traverses portant des renforts intermédiaires coopérant de manière fiable avec les volets de l'ensemble de volets.

Un autre objectif de la présente invention est de proposer un dispositif d'obturation présentant des renforts intermédiaires permettant le guidage en rotation des volets de l'ensemble de volets.

Un autre objectif de la présente invention, différent des objectifs énoncés ci-dessus, est de proposer un dispositif d'obturation ayant un coût de fabrication moindre tout en proposant une bonne résistance des volets disposés dans l'ouverture du dispositif d'obturation aux différentes forces qu'ils peuvent être amenés à subir.

Un autre objectif de la présente invention, différent des objectifs énoncés ci-dessus, est de proposer un dispositif d'obturation présentant un poids amélioré tout en proposant également une bonne résistances des volets aux différentes forces qu'ils peuvent subir.

A cet effet, pour atteindre au moins partiellement au moins un des objectifs précités, la présente invention a pour objet un volet pour dispositif d'obturation d'entrée d'air de face avant de véhicule automobile, ledit volet correspondant à un profilé creux obtenu par extrusion et présentant une surface avant convexe destinée à être disposée en opposition à un flux d'air lorsque le volet est dans une position extrémale fermée et une surface arrière, opposée à la surface avant, destinée à être reliée à au moins un renfort porté par le dispositif d'obturation, la surface arrière présentant une forme spécifique d'engagement continue sur toute la longueur du volet et dont l'axe longitudinal est confondu avec l'axe de pivotement du volet, ladite forme spécifique d'engagement étant destinée à coopérer avec au moins une forme complémentaire portée par l'au moins un renfort, ladite coopération étant de type mâle-femelle de manière à permettre un encliquetage de la forme spécifique d'engagement et de la forme complémentaire afin d'assurer la fixation du volet sur le renfort et de permettre son guidage en pivotement.

La présence de la forme spécifique sur toute la longueur du volet permet de conserver le procédé de fabrication par extrusion du volet en adaptant uniquement la filière d'extrusion. Par ailleurs, la présence de cette forme spécifique d'engagement sur toute la longueur du volet permet d'installer ce volet sur tout dispositif d'obturation quelque soit la taille requise du volet, et notamment sa longueur. De plus, la coopération par encliquetage de la forme spécifique d'engagement et de la forme complémentaire permet de renforcer la coopération du volet avec le renfort porté par le dispositif d'obturation et également de permettre un guidage en pivotement du volet.

Le volet selon la présente invention peut comprendre en outre une ou plusieurs des caractéristiques suivantes prises seules ou en combinaison.

Le profilé creux comprend au moins une entretoise disposée dans le creux du profilé.

Selon une variante, la forme spécifique d'engagement de la surface arrière présente une ouverture rétrécie débouchant sur une gorge de section circulaire, ladite forme spécifique d'engagement correspondant à une partie femelle et étant configurée pour maintenir la forme complémentaire correspondant à la partie mâle portée par l'au moins un renfort.

Selon cette variante, la surface arrière du volet est de forme générale convexe.

Selon cette variante également, l'ouverture rétrécie est chanfreinée.

Selon une autre variante, la forme spécifique d'engagement de la surface arrière présente une paroi longitudinale faisant saillie de la surface arrière dont l'extrémité libre présente une forme cylindrique, ladite forme spécifique d'engagement correspondant à la partie mâle et étant destinée à coopérer avec la forme complémentaire, correspondant à la partie femelle, portée par l'au moins un renfort.

Selon cette autre variante, la forme spécifique d'engagement est disposée dans une gaine de section circulaire transversale en partie ouverte.

La surface arrière du volet peut être de forme générale plane.

Selon un mode de réalisation particulier de cette autre variante, la paroi longitudinale est disposée dans le prolongement d'une entretoise comprise dans le profilé creux.

Selon ce mode de réalisation particulier, l'entretoise forme un angle compris entre 40° et 50°, notamment 45°, avec un axe central du volet.

Le volet peut être coextrudé avec un matériau thermoplastique ayant une résilience inférieure à 50 J/cm² au niveau de la forme spécifique d'engagement.

Le matériau de coextrusion utilisé est choisi parmi des composés de copolyester TPE-E, des oléfines thermoplastiques TPE-O, ou des poly(styrène-butadiène-styrène) SBS.

La présente invention a également pour objet un dispositif d'obturation d'entrée d'air de face avant de véhicule automobile comprenant un cadre support présentant une ouverture dans laquelle sont installés au moins un ensemble de volets mobiles en pivotement entre une position extrémale ouverte et une position extrémale fermée et au moins une traverse de rigidification comportant au moins un renfort par volet de l'ensemble de volets, lesdits renforts étant disposés en aval des volets dans le flux d'air, au moins un ensemble de volets étant constitué de volets tels que définis précédemment et les renforts comprenant un bras présentant une première extrémité reliée à la traverse de rigidification et une deuxième extrémité présentant la forme complémentaire destinée à coopérer avec la forme spécifique d'engagement du volet, ladite coopération étant de type mâle-femelle de manière à ce que la coopération entre le volet et la forme complémentaire se fait par encliquetage de manière à assurer la fixation du volet sur le renfort et permettre son pivotement.

Le dispositif d'obturation peut comprendre en outre une ou plusieurs des caractéristiques suivantes prises seules ou en combinaison.

Le bras vient de matière avec l'au moins une traverse de rigidification.

L'au moins une traverse de rigidification peut s'étendre perpendiculaire aux traverses supérieure et inférieure du cadre support.

L'ouverture du cadre support peut comprendre au moins deux traverses de rigidification s'étendant perpendiculairement aux traverses supérieure et inférieure du cadre support, lesdites traverses de rigidification étant disposées à intervalles réguliers sur le cadre support.

Selon un aspect, la forme spécifique d'engagement et la forme complémentaire présentent un espacement entre elles à l'état monté du volet dans le cadre support compris entre 0,2 et 1 mm, et notamment égal à 0,3 mm.

Selon une variante, la forme complémentaire portée par la deuxième extrémité du renfort présente une forme sphérique destinée à coopérer avec la forme spécifique d'engagement correspondant à la partie femelle.

Selon un mode de réalisation particulier de cette variante, l'ouverture rétrécie est chanfreinée de manière à augmenter la surface d'appui du volet sur le bras du renfort.

Selon une autre variante, la forme complémentaire de la deuxième extrémité présente une section ayant une forme de pince en C ayant une ouverture rétrécie par rapport au diamètre de la partie mâle portée par la forme spécifique d'engagement du volet.

Selon un aspect de l'une ou l'autre variante, le bras peut présenter une structure linéaire.

Selon cet aspect, le bras peut s'étendre parallèlement à la hauteur du cadre support.

Selon une alternative, le bras peut former avec le plan formé par la traverse supérieure du cadre support un angle compris entre 40° et 50°, notamment 45°.

Selon un autre aspect de l'une ou l'autre variante, le bras peut présenter une structure coudée.

Selon cet autre aspect, le coude forme un angle compris entre 40° et 50°, notamment 45°.

Selon cette autre variante, les extrémités de la pince en C forment chacune une surface de butée pour la paroi longitudinale lorsque le volet occupe sa position extrémale ouverte ou sa position extrémale fermée.

En position extrémale fermée, au moins une partie de la surface arrière vient au contact du bras du renfort.

En position extrémale ouverte, au moins une partie de la surface arrière vient au contact du bras du renfort.

D'autres caractéristiques et avantages de la présente invention apparaîtront plus clairement à la lecture de la description suivante, donnée à titre illustratif et non limitatif, et des dessins annexés dans lesquels :
- la figure 1 est une représentation schématique en perspective d'un dispositif d'obturation d'air d'entrée d'air de face avant de véhicule automobile,
- la figure 2 est une représentation schématique en coupe transversale d'un volet selon un premier mode de réalisation,
- la figure 3 est une représentation schématique en coupe transversale d'un volet selon une variante du premier mode de réalisation,
- la figure 4A est une représentation schématique en coupe transversale du volet de la figure 2 en position extrémale ouverte coopérant avec un renfort selon un premier mode de réalisation,
- la figure 4B est une représentation schématique en coupe transversale de la figure 4A lorsque le volet est en position extrémale fermée,
- la figure 5A est une représentation schématique en coupe transversale du volet de la figure 3 en position extrémale ouverte coopérant avec le renfort du premier mode de réalisation,
- la figure 5B est une représentation schématique en coupe transversale de la figure 5A lorsque le volet est en position extrémale fermée,
- la figure 6 est une représentation schématique en coupe transversale d'un volet sebn un deuxième mode de réalisation,
- la figure 7A est une représentation schématique en coupe transversale du volet de la figure 6 en position extrémale ouverte coopérant avec un renfort selon une première variante du deuxième mode de réalisation,
- la figure 7B est une représentation schématique en coupe transversale de la figure 7A lorsque le volet est en position extrémale fermée,
- la figure 8A est une représentation schématique en coupe transversale du volet de la figure 6 en position extrémale ouverte coopérant avec un renfort sebn une deuxième variante du deuxième mode de réalisation, et
- la figure 8B est une représentation schématique en coupe transversale de la figure 8A lorsque le volet est en position extrémale fermée.

Sur ces figures, les éléments identiques portent les mêmes références numériques.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées ou interchangées pour fournir d'autres réalisations.

Dans la description suivante, il est fait référence à une première et à une deuxième extrémités du bras du renfort. Il s'agit d'un simple indexage pour différencier et dénommer des éléments proches mais non identiques. Cette indexation n'implique pas une priorité d'un élément par rapport à un autre et on peut aisément interchanger de telles dénominations sans sortir du cadre de la présente description. Cette indexation n'implique pas non plus un ordre dans le temps par exemple pour apprécier la disposition et la coopération des différents éléments du dispositif d'obturation ou encore le fonctionnement du dispositif d'obturation.

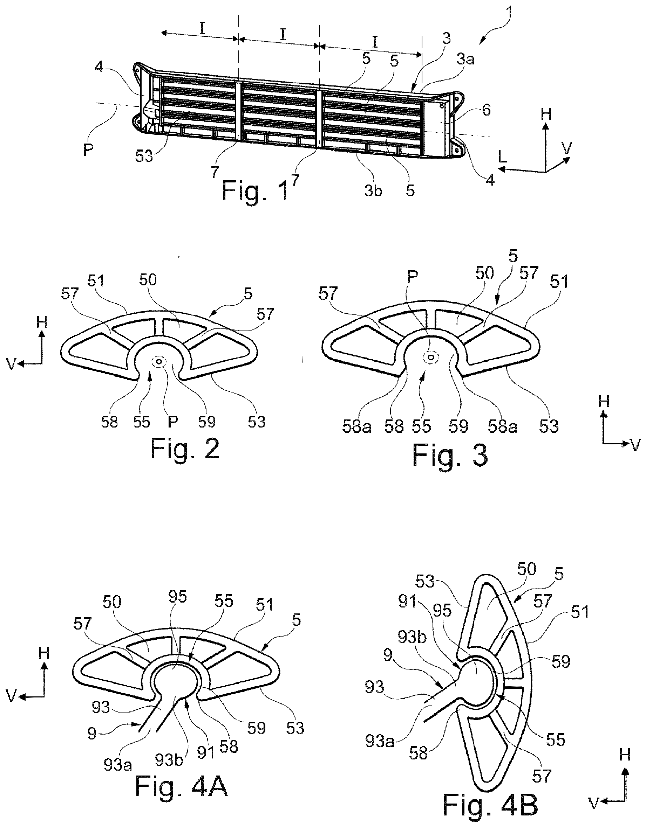

Dans la description suivante, on se réfère à une orientation en fonction des axes Longitudinaux, Verticaux et définissant une Hauteur tels que définis arbitrairement par le trièdre H, L, V, notamment représenté sur la figure 1 et partiellement représenté sur les figures 2 à 8B. Le choix des appellations de ces axes n'est pas limitatif de l'orientation que peut prendre le dispositif d'obturation dans son application à un véhicule automobile.

Dans la description suivante, on entend par « supérieur », « inférieur », et « externe », la disposition des éléments sur le dispositif d'obturation d'entrée d'air de face avant à l'état monté du dispositif d'obturation sur le véhicule automobile.

En référence à la figure 1, il est représenté un dispositif d'obturation 1 d'entrée d'air de face avant de véhicule automobile. Le dispositif d'obturation 1 comprend un cadre support 3 présentant une traverse supérieure 3a et une traverse inférieure 3b reliées par des montants latéraux 4 définissant une ouverture dans laquelle est installé un ensemble de volets 5 mobiles en pivotement entre une position extrémale ouverte et une position extrémale fermée. Les volets 5 sont mis en mouvement sous l'effet d'un actionneur 6, tel qu'un moteur par exemple. Le cadre support 3 comprend également au moins une traverse de rigidification 7 comportant au moins un renfort 9 par volet 5 de l'ensemble de volets 5 afin de limiter la flexion de ces volets sous la pression de l'air, notamment lorsque le véhicule roule à vitesse élevée. Les renforts 9 sont disposés d'une manière générale en aval des volets 5 dans le flux d'air.

Selon le mode de réalisation de la figure 1, le dispositif d'obturation 1 présente un actionneur 6 disposé au niveau d'un montant latéral 4 du cadre support 3. Par ailleurs, l'ouverture du cadre support 3 présente un seul ensemble de volets 5 mobiles en pivotement à l'aide de l'actionneur 6. Selon un autre mode de réalisation non représenté ici, l'actionneur 6 peut être disposé à l'intérieur du cadre support 3, et de préférence à la place d'une traverse de rigidification 7, et est configuré pour permettre le déplacement en pivotement de deux ensembles de volets 5 disposés dans l'ouverture.

Selon le mode de réalisation particulier de la figure 1, l'au moins une traverse de rigidification 7 s'étend perpendiculairement aux traverses supérieure 3a et inférieure 3b du cadre support 3. Par ailleurs, l'ouverture du cadre support 3 comprend dans l'exemple présenté deux traverses de rigidification 7 s'étendant perpendiculairement aux traverses supérieure 3a et inférieure 3b du cadre support 3. Les traverses de rigidification 7 sont séparées par une distance I et disposées à intervalles réguliers sur le cadre support 3 de manière à permettre une bonne rigidification des volets 5 et de prévenir une éventuelle flexion du volet 5. En effet, la disposition à intervalles réguliers des traverses de rigidification 7 portant des renforts 9 permet une meilleure distribution des différentes forces appliquées sur le volet 5 lorsque le véhicule automobile roule.

En référence aux figures 2, 3, et 6, les volets 5 correspondent à un profilé creux 50 obtenu par extrusion. Chaque volet 5 présente une surface avant 51, par exemple convexe, destinée à être disposée en opposition à un flux d'air lorsque le volet 5 est dans une position extrémale fermée et une surface arrière 53, opposée à la surface avant 51, destinée à être reliée à l'au moins un renfort 9 disposé sur l'au moins une traverse de renfort 7 portée par le dispositif d'obturation 1. La surface arrière 53 présente une forme spécifique d'engagement 55 continue sur toute la longueur du volet 5 et dont l'axe longitudinal est confondu avec l'axe de pivotement P du volet 5. En effet, la fabrication du volet par un procédé d'extrusion permet l'obtention de cette forme spécifique d'engagement 55 sur toute la longueur du volet 5 en utilisant une filière adaptée. Par ailleurs, la présence de cette forme spécifique d'engagement 55 sur toute la longueur du volet 5 permet de conserver les mêmes procédés de fabrication, notamment au niveau d'une phase de découpe à la longueur souhaitée du volet 5 afin de l'installer dans tout type de dispositif d'obturation 1, et notamment quelque soit le longueur de ce dispositif d'obturation 1.

La forme spécifique d'engagement 55 est destinée à coopérer avec au moins une forme complémentaire 91 portée par l'au moins un renfort 9 (visible sur les figures 4A à 8B). La coopération entre la forme spécifique d'engagement 55 et la forme complémentaire 91 est de type mâle-femelle de manière à permettre un encliquetage de la forme spécifique d'engagement 55 et de la forme complémentaire 91 afin d'assurer la fixation du volet 5 sur le renfort 9 et de permettre son guidage en pivotement. La coopération par encliquetage du volet 5 avec le renfort 9 permet de renforcer leur coopération.

Selon un mode de réalisation particulier, le profilé creux 50 comprend au moins une entretoise 57 disposée dans le creux du profilé. En effet, afin de limiter le poids des dispositifs d'obturation 1, les volets 5 sont généralement formés par des profilés creux 50. La présence de l'entretoise 57 permet de renforcer la rigidité du volet 5 et de prévenir ainsi la déformation du volet 5.

Selon une variante non représentée, le volet 5 peut être coextrudé avec un matériau thermoplastique ayant une résilience inférieure à 50 J/cm² au niveau de la forme spécifique d'engagement 55. Le matériau de coextrusion utilisé est choisi parmi des composés de copolyester TPE-E, des oléfines thermoplastiques TPE-O, ou des poly(styrène-butadiène-styrène) SBS. L'utilisation d'un tel matériau thermoplastique au niveau de la forme spécifique d'engagement 55 permet de mieux absorber les chocs liés aux projections de pierres par exemple de la forme spécifique d'engagement 55 sur la forme complémentaire 91 que le volet 5 soit en position extrémale ouverte, en position extrémale fermée, ou encore dans une position intermédiaire entre ces deux positions extrémales ouverte et fermée.

En référence à la figure 2, il est représenté le volet 5 en coupe transversale selon un premier mode de réalisation particulier. Selon ce premier mode de réalisation, la forme spécifique d'engagement 55 de la surface arrière 53 présente une ouverture rétrécie 58 débouchant sur une gorge de section circulaire 59. La forme spécifique d'engagement 55 correspond à une partie femelle et est configurée pour maintenir la forme complémentaire 91 correspondant à la partie mâle portée par l'au moins un renfort 9. Par ailleurs, la surface arrière 53 du volet 5 peut être de forme générale convexe. Selon une variante, le surface arrière 53 du volet 5 peut être de forme générale plane.

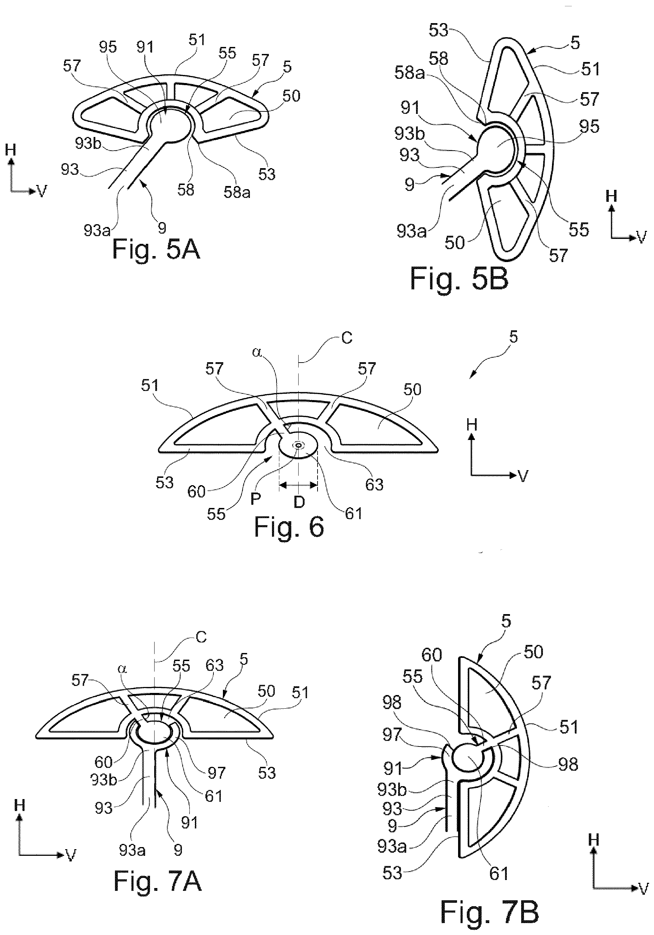

En référence à la figure 3, il est représenté le volet 5 en coupe transversale selon une variante du premier mode de réalisation. Selon cette variante, la forme spécifique d'engagement 55 correspond également à la partie femelle destinée à coopérer avec la partie mâle portée par le renfort 9. Selon cette variante, l'ouverture rétrécie 58 est chanfreinée. La présence des chanfreins 58a de l'ouverture rétrécie 58 permet d'augmenter la surface d'appui du volet 5 sur le renfort 9 (mieux visible sur la figure 5B) afin d'assurer une meilleure répartition des forces, notamment de pression, exercées sur le volet 5 lorsque le véhicule roule par exemple à vitesse élevée. En effet, lorsque le véhicule roule à vitesse élevée, les volets 5 du dispositif d'obturation 1 sont généralement dans leur position extrémale fermée afin de diminuer le coefficient de traînée du véhicule et d'améliorer ainsi son aérodynamisme. Ainsi, les forces de pression dues au flux d'air sur le volet 5 sont assez élevées lorsque les volets 5 sont dans leur position extrémale fermée.

En référence aux figures 4A à 5B, les renforts 9 comprennent un bras 93 présentant une première extrémité 93a reliée à la traverse de rigidification 7 et une deuxième extrémité 93b présentant la forme complémentaire 91 destinée à coopérer avec la forme spécifique d'engagement 55 du volet 5. Avantageusement, le bras 93 vient de matière avec l'au moins une traverse de rigidification 7 de manière à permettre la fabrication du cadre support 3 selon les procédés de fabrication actuels, comme par exemple par un procédé de moulage par injection.

Afin de permettre le pivotement du volet 5, la forme spécifique d'engagement 55 et la forme complémentaire 91 présentent un espacement entre elles à l'état monté du volet 5 dans le cadre support 3 compris entre 0,2 et 1 mm, et notamment égal à 0,3 mm.

Par ailleurs, en position extrémale fermée, au moins une partie de la surface arrière 53 peut venir au contact du bras 93 du renfort 9 afin de permettre une meilleure distribution des forces de pression par exemple exercées par le flux d'air lorsque les volets 5 sont dans leur position extrémale fermée. De plus, en position extrémale ouverte, au moins une partie de la surface arrière 53 vient au contact du bras 93 du renfort 9 afin de rigidifier les volets 5 lorsqu'ils sont en position extrémale ouverte afin de prévenir la torsion de ces derniers par exemple.

En référence aux figures 4A à 5B, il est représenté la forme complémentaire 91 du bras 93 coopérant avec le volet 5 selon le premier mode de réalisation. Selon ce premier mode de réalisation, la forme complémentaire 91 portée par la deuxième extrémité 93b du renfort 9 présente une forme sphérique 95, correspondant à la partie mâle, destinée à coopérer avec la forme spécifique d'engagement 55 correspondant à la partie femelle.

Selon ce premier mode de réalisation particulier, le bras 93 peut présenter une structure linéaire. Le bras 93 forme avec le plan formé par la traverse supérieure 3a du cadre support 3 un angle compris entre 40° et 50°, notamment 45°. Selon une variante non représentée ici, le bras 93 peut présenter une structure coudée et le coude forme un angle compris entre 40° et 50°, notamment 45°. Un tel angle pour le bras 93 avec la traverse supérieure 3a ou pour le coude permet d'assurer le bon pivotement du volet 5 entre sa position extrémale ouverte et sa position extrémale fermée.

En référence aux figures 4A et 4B, il est représenté le volet 5 du premier mode de réalisation décrit en référence à la figure 2 coopérant avec la forme complémentaire 91 décrite selon le premier mode de réalisation dans la position extrémale ouverte (figure 4A) et dans la position extrémale fermée (figure 4B). En référence à la figure 4A, lorsque le volet 5 est en position extrémale ouverte, une partie de l'ouverture rétrécie 58 vient au contact du bras 93 afin d'augmenter la rigidité du volet 5 lorsqu'il occupe sa position extrémale ouverte. Le bras 93 peut par exemple servir de butée au volet 5 lorsqu'il occupe sa position extrémale ouverte. En référence à la figure 4B, une partie de l'ouverture rétrécie 58 vient également au contact du bras 93 lorsque le volet est dans sa position extrémale fermée. Par ailleurs, lorsque le volet 5 est dans sa position extrémale fermée, la forme spécifique d'engagement 55 et la forme complémentaire 91 peuvent être au contact l'une de l'autre car le volet 5 est repoussé vers le bras 93 par le flux d'air lorsque le véhicule roule à vitesse élevée.

En référence aux figures 5A et 5B, il est représenté le volet 5 de la variante du premier mode de réalisation décrit en référence à la figure 3 coopérant avec la forme complémentaire 91 décrite selon le premier mode de réalisation dans la position extrémale ouverte (figure 5A) et dans la position extrémale fermée (figure 5B). En référence aux figures 5A et 5B, un des chanfreins 58a de l'ouverture rétrécie 58 vient au contact du bras 93 lorsque le volet 5 est dans sa position extrémale ouverte et l'autre des chanfreins 58a vient au contact du bras 93 lorsque le volet 5 est dans sa position extrémale fermée de manière à augmenter la surface d'appui du volet 5 sur le bras 93 du renfort 9 afin de permettre une bonne répartition des forces exercées sur le volet. Comme précédemment, en référence à la figure 5B, lorsque le volet 5 est dans sa position extrémale fermée, la forme spécifique d'engagement 55 et la forme complémentaire 91 peuvent être au contact l'une de l'autre sous l'effet du flux d'air lorsque le véhicule se déplace à vitesse élevée.

En référence à la figure 6, il est représenté le volet 5 en coupe transversale selon un deuxième mode de réalisation. Selon ce deuxième mode de réalisation particulier, la forme spécifique d'engagement 55 de la surface arrière 53 présente une paroi longitudinale 60 faisant saillie de la surface arrière 53 dont l'extrémité libre 61 présente une forme cylindrique présentant un diamètre D. Ainsi, dans ce deuxième mode de réalisation, la forme spécifique d'engagement 55 correspond à la partie mâle et est destinée à coopérer avec la forme complémentaire 91, correspondant à la partie femelle, portée par l'au moins un renfort 9.

Selon le mode de réalisation particulier de la figure 6, la forme spécifique d'engagement 55 est disposée dans une gaine 63 de section circulaire transversale en partie ouverte. Par ailleurs, la surface arrière 53 du volet est de forme générale plane afin de venir en appui sur le renfort 9 afin de permettre une bonne répartition des forces, notamment de pression, exercées sur le volet 5 lorsqu'il est dans sa position extrémale fermée.

Avantageusement, la paroi longitudinale 60 est disposée dans le prolongement d'une entretoise 57 comprise dans le profilé creux. Une telle disposition de la paroi longitudinale 60 permet de renforcer cette dernière car l'entretoise 57 disposée dans le prolongement de la paroi longitudinale 60 peut absorber une partie des déformations liées au flux d'air par exemple s'exerçant sur la paroi longitudinale 60. Par ailleurs, l'entretoise 57 forme un angle α compris entre 40° et 50°, notamment 45°, avec un axe central C du volet 5. Un tel angle α entre l'entretoise 57 et l'axe central C du volet 5 permet d'assurer un bon pivotement du volet entre sa position extrémale ouverte et sa position extrémale fermée.

En référence aux figures 7A à 8B, il est représenté la forme complémentaire 91 selon une première variante et une deuxième variante coopérant avec le volet 5 du deuxième mode de réalisation décrit en référence à la figure 6. Selon ces variantes, la forme complémentaire 91 de la deuxième extrémité 93b présente une section ayant une forme de pince en C 97 présentant une ouverture rétrécie par rapport au diamètre D de la partie mâle portée par la forme spécifique d'engagement 55 du volet 5.

Selon une variante, le bras 93 peut présenter une structure linéaire. Selon une autre variante non représentée ici, le bras 93 peut présenter une structure coudée, le coude formant un angle par exemple compris entre 40° et 50°, notamment 45° afin de permettre un bon pivotement du volet 5 entre sa position extrémale ouverte et sa position extrémale fermée.

Selon ces variantes du deuxième mode de réalisation, les extrémités 98 de la pince en C 97 forment chacune une surface de butée pour la paroi longitudinale 60 lorsque le volet 5 occupe sa position ouverte ou sa position fermée. Ainsi, les forces de pressions par exemple exercées par le flux d'air sont mieux réparties et la solidité du dispositif d'obturation 1 est améliorée.

En référence aux figures 7A et 7B, il est représenté le volet 5 selon le deuxième mode de réalisation décrit en référence à la figure 6 coopérant avec la forme complémentaire 91 selon la première variante dans la position extrémale ouverte (figure 7A) et dans la position extrémale fermée (figure 7B). Selon cette première variante, la forme complémentaire 91 correspond à la pince en C 97 décrite précédemment et le bras 93 présente une structure linéaire et s'étend parallèlement à la hauteur du cadre support 3. En référence à la figure 7B, la surface arrière 53 du volet 5 est plane et vient au contact du bras 93 lorsque le volet 5 est dans sa position extrémale fermée. Une telle configuration permet une bonne répartition des forces exercées sur le volet 5 et permet d'améliorer la rigidité de ce dernier.

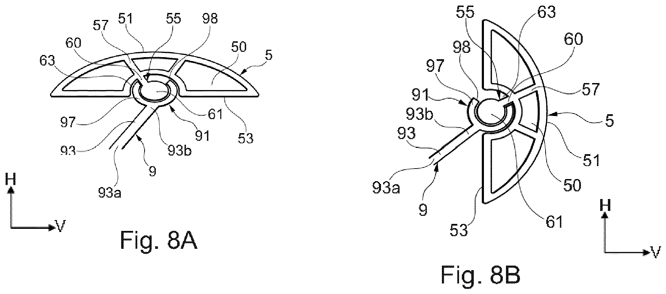

En référence aux figures 8A et 8B, il est représenté le volet 5 selon le deuxième mode de réalisation décrit en référence à la figure 6 coopérant avec la forme complémentaire 91 selon la deuxième variante dans la position extrémale ouverte (figure 8A) et dans la position extrémale fermée (figure 8B). Selon cette deuxième variante, la forme complémentaire 91 correspond également à la pince en C 97 décrite précédemment et le bras 93 présente une structure linéaire et forme avec la plan de la traverse supérieure 3a un angle compris entre 40° et 50°, et plus particulièrement un angle de 45°.

Les modes de réalisation décrits ci-dessus sont fournis uniquement à titre illustratif et non limitatif en référence aux figures qui illustrent des modes de réalisation particuliers. En effet, il est tout à fait possible pour l'homme de l'art d'utiliser d'autres matériaux thermoplastiques pour coextruder la surface de la forme spécifique d'engagement 55 par exemple sans sortir du cadre de la présente invention. Par ailleurs, les angles fournis pour les entretoises 57 disposées à l'intérieur du profilé creux 50, pour l'inclinaison du bras 93 par rapport au plan défini par la traverse supérieure 3a, ou encore formé par le coude lorsque le bras 93 est coudé sont uniquement des exemples, en effet leurs valeurs peuvent être modifiées par l'homme de l'art sans sortir du cadre de la présente invention. De plus, l'homme de l'art pourra utiliser toute autre disposition des traverses de rigidification 7 à l'intérieur de l'ouverture du cadre support 3 que celle décrite précédemment sans sortir du cadre de la présente invnetion.

Ainsi, l'obtention d'un dispositif d'obturation 1 d'entrée d'air de face avant de véhicule automobile ayant un coût de fabrication et un poids amélioré est possible grâce au dispositif d'obturation 1 décrit ci-dessus. En effet, les renforts sont de préférence moulés dans le cadre support 3 ce qui permet d'éviter l'utilisation de pièces supplémentaires. Par ailleurs, la coopération de la forme spécifique d'engagement 55 et de la forme complémentaire 91 assurer le guidage en pivotement du volet 5 et leur encliquetage permet de renforcer leur coopération.

## Revendications

1. Volet (5) pour dispositif d'obturation (1) d'entrée d'air de face avant de véhicule automobile, ledit volet (5) correspondant à un profilé creux (50) obtenu par extrusion et présentant une surface avant (51) convexe destinée à être disposée en opposition à un flux d'air lorsque le volet (5) est dans une position extrémale fermée et une surface arrière (53), opposée à la surface avant (51), destinée à être reliée à au moins un renfort (9) porté par le dispositif d'obturation (1), **caractérisé en ce que** la surface arrière (53) présente une forme spécifique d'engagement (55) continue sur toute la longueur du volet (5) et dont l'axe longitudinal est confondu avec l'axe de pivotement (P) du volet (5), ladite forme spécifique d'engagement (55) étant destinée à coopérer avec au moins une forme complémentaire (91) portée par l'au moins un renfort (9), ladite coopération étant de type mâle-femelle de manière à permettre un encliquetage de la forme spécifique d'engagement (55) et de la forme complémentaire (91) afin d'assurer la fixation du volet (5) sur le renfort (9) et de permettre son guidage en pivotement.

2. Volet (5) selon la revendication précédente, **caractérisé en ce que** la forme spécifique d'engagement (55) de la surface arrière (53) présente une ouverture rétrécie (58) débouchant sur une gorge de section circulaire (59), ladite forme spécifique d'engagement (55) correspondant à une partie femelle et étant configurée pour maintenir la forme complémentaire (91) correspondant à la partie mâle portée par l'au moins un renfort (9).

3. Volet (5) selon la revendication 1, **caractérisé en ce que** la forme spécifique d'engagement (55) de la surface arrière (53) présente une paroi longitudinale (60) faisant saillie de la surface arrière (53) dont l'extrémité libre (61) présente une forme cylindrique, ladite forme spécifique d'engagement (55) correspondant à la partie mâle et étant destinée à coopérer avec la forme complémentaire (91), correspondant à la partie femelle, portée par l'au moins un renfort (9).

4. Volet (5) selon la revendication 3, **caractérisé en ce que** la forme spécifique d'engagement (55) est disposée dans une gaine (63) de section circulaire transversale en partie ouverte.

5. Volet (5) selon l'une quelconque des revendications précédentes, **caractérisé en ce qu'**il est coextrudé avec un matériau thermoplastique ayant une résilience inférieure à 50 J/cm² au niveau de la forme spécifique d'engagement (55).

6. Dispositif d'obturation (1) d'entrée d'air de face avant de véhicule automobile comprenant un cadre support (3) présentant une ouverture dans laquelle sont installés au moins un ensemble de volets (5) mobiles en pivotement entre une position extrémale ouverte et une position extrémale fermée et au moins une traverse de rigidification (7) comportant au moins un renfort (9) par volet (5) de l'ensemble de volets (5), lesdits renforts (9) étant disposés en aval des volets (5) dans le flux d'air, **caractérisé en ce que** l'au moins un ensemble de volets (5) est constitué de volets (5) selon l'une quelconque des revendications précédentes et **en ce que** les renforts (9) comprennent un bras (93) présentant une première extrémité (93a) reliée à la traverse de rigidification (7) et une deuxième extrémité (93b) présentant la forme complémentaire (91) destinée à coopérer avec la forme spécifique d'engagement (55) du volet (5), ladite coopération étant de type mâle-femelle de manière à ce que la coopération entre le volet (5) et la forme complémentaire (91) se fait par encliquetage de manière à assurer la fixation du volet (5) sur le renfort (9) et permettre son pivotement.

7. Dispositif d'obturation (1) selon la revendication 6, **caractérisé en ce que** la forme spécifique d'engagement (55) et la forme complémentaire (91) présentent un espacement entre elles à l'état monté du volet (5) dans le cadre support (3) compris entre 0,2 et 1 mm, et notamment égal à 0,3 mm.

8. Dispositif d'obturation (1) selon l'une quelconque des revendications 6 ou 7 prise en combinaison avec la revendication 2, **caractérisé en ce que** la forme complémentaire (91) portée par la deuxième extrémité (93b) du renfort (9) présente une forme sphérique (95) destinée à coopérer avec la forme spécifique d'engagement (55) correspondant à la partie femelle.

9. Dispositif d'obturation (1) selon l'une quelconque des revendications 6 ou 7 prise en combinaison avec l'une quelconque des revendications 3 ou 4, **caractérisé en ce que** la forme complémentaire (91) de la deuxième extrémité (93b) présente une section ayant une forme de pince en C (97) ayant une ouverture rétrécie par rapport au diamètre (D) de la partie mâle portée par la forme spécifique d'engagement (55) du volet (5).

10. Dispositif d'obturation (1) selon la revendication 9, **caractérisé en ce que** les extrémités (98) de la pince en C (97) forment chacune une surface de butée pour la paroi longitudinale (60) lorsque le volet (5) occupe sa position extrémale ouverte ou sa position extrémale fermée.

## Patentansprüche

1. Klappe (5) für eine Verschlussvorrichtung (1) eines Lufteinlasses eines Kraftfahrzeug-Frontblechs, wobei die Klappe (5) einem durch Extrudieren erhaltenen Hohlprofilteil (50) entspricht und eine konvexe Vorderfläche (51), die dazu bestimmt ist, in Gegenrichtung zu einem Luftstrom angeordnet zu sein, wenn die Klappe (5) in einer geschlossenen Endstellung ist, und eine Rückfläche (53) entgegengesetzt zur Vorderfläche (51) aufweist, die dazu bestimmt ist, mit mindestens einer von der Verschlussvorrichtung (1) getragenen Verstärkung (9) verbunden zu werden, **dadurch gekennzeichnet, dass** die Rückfläche (53) eine spezielle Eingriffsform (55) aufweist, die über die ganze Länge der Klappe (5) durchgehend ist und deren Längsachse mit der Schwenkachse (P) der Klappe (5) zusammenfällt, wobei die spezielle Eingriffsform (55) dazu bestimmt ist, mit mindestens einer komplementären Form (91) zusammenzuwirken, die von der mindestens einen Verstärkung (9) getragen wird, wobei die Zusammenwirkung von der Art Steckverbindung ist, um ein Einrasten der speziellen Eingriffsform (55) und der komplementären Form (91) zu ermöglichen, um die Befestigung der Klappe (5) an der Verstärkung (9) zu gewährleisten und ihre Schwenkführung zu ermöglichen.

2. Klappe (5) nach dem vorhergehenden Anspruch, **dadurch gekennzeichnet, dass** die spezielle Eingriffsform (55) der Rückfläche (53) eine verengte Öffnung (58) aufweist, die auf eine Kehle mit Kreisquerschnitt (59) mündet, wobei die spezielle Eingriffsform (55) einem Aufnahmeteil entspricht und konfiguriert ist, die dem von der mindestens einen Verstärkung (9) getragenen Steckerteil entsprechende komplementäre Form (91) zu halten.

3. Klappe (5) nach Anspruch 1, **dadurch gekennzeichnet, dass** die spezielle Eingriffsform (55) der Rückfläche (53) eine Längswand (60) aufweist, die von der Rückfläche (53) vorsteht, deren freies Ende (61) eine zylindrische Form hat, wobei die spezielle Eingriffsform (55) dem Steckerteil entspricht und dazu bestimmt ist, mit der dem Aufnahmeteil entsprechenden komplementären Form (91) zusammenzuwirken, die von der mindestens einen Verstärkung (9) getragen wird.

4. Klappe (5) nach Anspruch 3, **dadurch gekennzeichnet, dass** die spezielle Eingriffsform (55) in einer Hülle (63) mit zum Teil offenem kreisförmigem Querschnitt angeordnet ist.

5. Klappe (5) nach einem der vorhergehenden Ansprüche, **dadurch gekennzeichnet, dass** sie mit einem thermoplastischen Werkstoff co-extrudiert wird, der eine Schlagzähigkeit von weniger als 50 J/cm² im Bereich der speziellen Eingriffsform (55) hat.

6. Verschlussvorrichtung (1) eines Lufteinlasses eines Kraftfahrzeug-Frontblechs, die einen Trägerrahmen (3), der eine Öffnung aufweist, in die mindestens eine Einheit von Klappen (5) eingebaut ist, die zwischen einer offenen Endstellung und einer geschlossenen Endstellung schwenkbeweglich sind, und mindestens einen Versteifungsquerträger (7) enthält, der mindestens eine Verstärkung (9) pro Klappe (5) der Einheit von Klappen (5) aufweist, wobei die Verstärkungen (9) im Luftstrom stromabwärts hinter den Klappen (5) angeordnet sind, **dadurch gekennzeichnet, dass** die mindestens eine Einheit von Klappen (5) aus Klappen (5) nach einem der vorhergehenden Ansprüche besteht, und dass die Verstärkungen (9) einen Arm (93) enthalten, der ein mit dem Versteifungsquerträger (7) verbundenes erstes Ende (93a) und ein zweites Ende (93b) aufweist, das die komplementäre Form (91) aufweist, die dazu bestimmt ist, mit der speziellen Eingriffsform (55) der Klappe (5) zusammenzuwirken, wobei das Zusammenwirken von der Art Steckverbindung ist, so dass die Zusammenwirkung zwischen der Klappe (5) und der komplementären Form (91) durch Einrasten erfolgt, um die Befestigung der Klappe (5) an der Verstärkung (9) zu gewährleisten und ihr Schwenken zu erlauben.

7. Verschlussvorrichtung (1) nach Anspruch 6, **dadurch gekennzeichnet, dass** die spezielle Eingriffsform (55) und die komplementäre Form (91) im in den Trägerrahmen (3) montierten Zustand der Klappe (5) einen Abstand zwischen sich aufweisen, der zwischen 0,2 und 1 mm liegt und insbesondere gleich 0,3 mm ist.

8. Verschlussvorrichtung (1) nach einem der Ansprüche 6 oder 7 in Kombination mit Anspruch 2, **dadurch gekennzeichnet, dass** die vom zweiten Ende (93b) der Verstärkung (9) getragene komplementäre Form (91) eine Kugelform (95) aufweist, die dazu bestimmt ist, mit der dem Aufnahmeteil entsprechenden speziellen Eingriffsform (55) zusammenzuwirken.

9. Verschlussvorrichtung (1) nach einem der Ansprüche 6 oder 7 in Kombination mit einem der Ansprüche 3 oder 4, **dadurch gekennzeichnet, dass** die komplementäre Form (91) des zweiten Endes (93b) einen Querschnitt aufweist, der eine Form einer C-förmigen Klemme (97) hat, die eine bezüglich des Durchmessers (D) des von der speziellen Eingriffsform (55) der Klappe (5) getragenen Steckerteils verengte Öffnung hat.

10. Verschlussvorrichtung (1) nach Anspruch 9, **dadurch gekennzeichnet, dass** die Enden (98) der C-förmigen Klemme (97) je eine Anschlagfläche für die Längswand (60) bilden, wenn die Klappe (5) ihre offene Endstellung oder ihre geschlossene Endstellung einnimmt.

## Claims

1. Flap (5) for a motor vehicle front side air inlet shutter device (1), said flap (5) corresponding to a hollow profile (50) obtained by extrusion and having a convex front area (51) intended to be placed in opposition to an airflow when the flap (5) is in a closed end position and a rear area (53), opposite the front area (51), intended to be connected to at least one reinforcement (9) borne by the shutter device (1), **characterized in that** the rear area (53) has an engagement specific shape (55) that is continuous over the entire length of the flap (5) and the longitudinal axis of which is merged with the pivoting axis (P) of the flap (5), said engagement specific shape (55) being intended to cooperate with at least one complementary shape (91) borne by the at least one reinforcement (9), said cooperation being of male-female type such as to allow snap-fitting of the engagement specific shape (55) and of the complementary shape (91) in order to fix the flap (5) on the reinforcement (9) and allow it to be pivotably guided.

2. Flap (5) according to the preceding claim, **characterized in that** the engagement specific shape (55) of the rear area (53) has a narrowed opening (58) leading onto a circular section recess (59), said engagement specific shape (55) corresponding to a female component and being configured to hold the complementary shape (91) corresponding to the male component borne by the at least one reinforcement (9).

3. Flap (5) according to Claim 1, **characterized in that** the engagement specific shape (55) of the rear area (53) has a longitudinal wall (60) projecting from the rear area (53), the free end (61) of which has a cylindrical shape, said engagement specific shape (55) corresponding to the male component and being intended to cooperate with the complementary shape (91), corresponding to the female component, borne by the at least one reinforcement (9) .

4. Flap (5) according to Claim 3, **characterized in that** the engagement specific shape (55) is placed in a partly open circular cross-section wrapping (63).

5. Flap (5) according to any one of the preceding claims, **characterized in that** it is co-extruded with a thermoplastic material having an impact strength less than 50 J/cm² at the engagement specific shape (55).

6. Motor vehicle front side air inlet shutter device (1) comprising a support frame (3) having an opening in which is fitted at least one assembly of flaps (5) that can pivot between an open end position and a closed end position and at least one stiffening strut (7) including at least one reinforcement (9) per flap (5) of the assembly of flaps (5), said reinforcements (9) being placed downstream of the flaps (5) in the airflow, **characterized in that** the at least one assembly of flaps (5) is formed from flaps (5) according to any one of the preceding claims and **in that** the reinforcements (9) comprise an arm (93) having a first end (93a) connected to the stiffening strut (7) and a second end (93b) having the complementary shape (91) intended to cooperate with the engagement specific shape (55) of the flap (5), said cooperation being of male-female type such that the cooperation between the flap (5) and the complementary shape (91) occurs by means of snap-fitting such as to fix the flap (5) on the reinforcement (9) and allow it to pivot.

7. Shutter device (1) according to Claim 6, **characterized in that** the engagement specific shape (55) and the complementary shape (91) have a spacing therebetween when the flap (5) is installed in the support frame (3) of between 0.2 and 1 mm, and notably equal to 0.3 mm.

8. Shutter device (1) according to any one of Claims 6 or 7 taken in combination with Claim 2, **characterized in that** the complementary shape (91) borne by the second end (93b) of the reinforcement (9) has a spherical shape (95) intended to cooperate with the engagement specific shape (55) corresponding to the female component.

9. Shutter device (1) according to any one of Claims 6 or 7 taken in combination with any one of Claims 3 or 4, **characterized in that** the complementary shape (91) of the second end (93b) has a section having a C-clamp (97) shape having a narrowed opening with respect to the diameter (D) of the male component borne by the engagement specific shape (55) of the flap (5).

10. Shutter device (1) according to Claim 9, **characterized in that** the ends (98) of the C-clamp (97) each form an abutment area for the longitudinal wall (60) when the flap (5) occupies the open end position thereof or the closed end position thereof.
